# FASCICULE DE BREVET EUROPEEN

(11) **EP 3 194 224 B1**
(45) Date de publication et mention de la délivrance du brevet: **24.07.2019**
(21) Numéro de dépôt: 15763055.9
(22) Date de dépôt: 26.08.2015
(51) Int. Cl.: B60T 8/36, B60R 16/04

(54) **VEHICULE AVEC UN ELEMENT INCOMPRESSIBLE FIXE SUR UN ELEMENT COMPRESSIBLE EN CAS DE COLLISION**
FAHRZEUG MIT EINEM NICHTKOMPRIMIERBAREN ELEMENT, DAS FÜR DEN FALL EINER KOLLISION AN EIN KOMPRIMIERBARES ELEMENT ANGEBRACHT IST
VEHICLE WITH A NON-COMPRESSIBLE ELEMENT ATTACHED TO A COMPRESSIBLE ELEMENT IN CASE OF COLLISION

(30) Priorité: 05.09.2014 FR 1458356
(43) Date de publication de la demande: 26.07.2017
(73) Titulaire: Renault s.a.s, 92100 Boulogne-Billancourt (FR)
(72) Inventeur: GODARD, Pascal, F-78440 Gargenville (FR); RAGNEAU, Sébastien, F-27800 Berthouville (FR); MATHIAS, Sébastien, F-78650 Beynes (FR)
(86) Numéro de dépôt international: PCT/FR2015/052270
(87) Numéro de publication internationale: WO 2016/034794

(56) Documents cités:
- EP-A1- 2 636 562
- WO-A1-2014/128855
- US-A1- 2009 226 806
- US-A1- 2012 006 607

## Description

La présente invention se rapporte au domaine de l'amélioration du comportement de pièces mécaniques dans un véhicule lors de collision. En particulier, la présente invention a trait à un véhicule automobile comprenant un élément incompressible fixé par des fixations sur un élément compressible du compartiment moteur, ces fixations étant agencées pour ne pas altérer le comportement de l'élément compressible en cas de collision. L'invention a également trait à l'élément incompressible avec une partie de ces fixations.

Pour absorber l'énergie en cas de collision, il est courant d'utiliser certains éléments compressibles. Par exemple, on peut utiliser un longeron en acier, apte à se comprimer dans sa direction longitudinal. Pour absorber un choc frontal, ce longeron sera placé dans le compartiment moteur du véhicule en s'étendant selon sa longueur, parallèlement à une direction avant arrière du véhicule. Autant de longueur aura ce longeron, autant de plis de la tôle pourront se former et donc d'énergie pourra être absorbée.

Cependant aujourd'hui, le compartiment moteur d'un véhicule est de plus en plus encombré. Certains éléments, tel que le bloc hydraulique, qui autrefois se plaçaient hors du compartiment moteur, par exemple sous le châssis du véhicule, se placent parfois dans le compartiment moteur. Il faut alors trouver un agencement permettant de le placer et de le fixer. Par ailleurs, cela doit se faire en évitant le plus possible de diminuer les capacités d'absorption de l'énergie d'un choc frontal. Notamment, la compressibilité du longeron ne doit pas être altérée. Les documents WO 2014/128855 A1, US 2009/226806 A1, EP 2 636 562 A1 et US 2012/006607 A1 décrivent un véhicule automobile comprenant des éléments compressibles et des éléments incompressibles pourvus de fixations adaptées aux chocs.

Le problème technique que vise à résoudre l'invention est donc d'améliorer l'agencement d'éléments incompressibles dans un moteur, tout en conservant une absorption de l'énergie en cas de choc convenable.

A cet effet, un premier objet de l'invention est un véhicule automobile comprenant :
- un élément incompressible logé dans un compartiment moteur,
- un élément compressible selon une direction donnée en cas de choc, sur lequel l'élément incompressible est fixé d'une première fixation et d'une deuxième fixation, distinctes et distantes l'une de l'autre,
   la première fixation étant agencée de manière à ce qu'en cas de choc celle-ci se défasse ou se rompe, l'élément incompressible n'étant alors fixé plus que par la deuxième fixation.

Grâce à cet agencement de fixation, l'élément incompressible ne fera plus office de renfort de l'élément compressible. La portion de l'élément compressible située entre ces deux fixations, avant le choc, va être à nouveau disponible en compression lors du choc. Ainsi, cet agencement a permis non seulement de fixer un élément incompressible dans le compartiment moteur sur l'élément compressible, permettant ainsi de rendre plus compact l'agencement des éléments compressibles du véhicule, souvent des dispositifs fonctionnels, mais encore de ne pas réduire les capacités d'absorption de choc du véhicule.

De plus, comme l'élément compressible reste fixé à l'une de ses fixations, sa trajectoire reste contrôlée. On évite ainsi qu'il aille à un endroit où il pourrait être préjudiciable, par exemple en se logeant derrière un autre élément incompressible, réduisant ainsi les capacités de compression du véhicule.

L'invention peut optionnellement présenter également une ou plusieurs des caractéristiques suivantes :
- la première fixation comprend des premiers moyens complémentaires, comprenant un moyen enserrant et un moyen enserré, le moyen enserrant partiellement le moyen enserré, l'un de ces moyens complémentaires étant solidaire de l'élément compressible et l'autre de l'élément incompressible, la première fixation n'étant assurée que par ce moyen enserrant et ce moyen enserré, au moins l'un de ces premiers moyens complémentaires étant déformable, les premiers moyens complémentaires étant agencés de manière à ce qu'en cas de choc, le moyen enserré se déchausse du moyen enserrant ;
- la première fixation comprend une plaque de tôle fixée sur ledit élément incompressible et dans lequel le moyen enserré comprend une première tige fixée à l'élément compressible, cette plaque de tôle comprenant une échancrure, la première tige passant au travers de la plaque de tôle dans l'échancrure, au moins une partie des bords de l'échancrure formant une boucle ouverte qui forme ledit moyen enserrant et enserre cette première tige, les extrémités de la boucle étant non jointives et à une distance l'une de l'autre inférieure au diamètre de la première tige ; ainsi l'énergie du choc va permettre de faire passer la tige en force entre les extrémités de la boucle, et donc de se déchausser ; il s'agit donc d'une manière simple de réaliser une fixation permettant le déchaussement de l'une de ses parties, ici la tige, par exemple la tige filetée d'une vis ;
- les extrémités de la boucle sont jointives avec la périphérie de la plaque de tôle ; cela permet un dégagement plus facile de la tige ; cette périphérie correspond aux bords de la tôle ;
- la boucle est agencée pour déboucher, entre ses deux extrémités, dans le sens opposé au sens du choc selon la direction donnée ; ceci permet un meilleur déchaussement ;
- la deuxième fixation comprend :
   - des deuxièmes moyens complémentaires, comprenant un moyen enserrant et un moyen enserré, ce moyen enserrant partiellement le moyen enserré, l'un de ces deuxièmes moyens complémentaires étant solidaire de l'élément compressible et l'autre de l'élément incompressible, la deuxième fixation étant assurée par ce moyen enserrant et ce moyen enserré, au moins l'un de ces deuxièmes moyens complémentaires étant déformable,
   - un moyen de retenue solidaire d'une part avec l'un des deuxièmes moyens complémentaires et d'autre part avec l'autre de ces deuxièmes moyens complémentaires,
   les deuxièmes moyens complémentaires étant agencés de manière à ce qu'en cas de choc, le moyen enserré se déchausse du moyen enserrant, la deuxième fixation n'étant alors assurée plus que par le moyen de retenue ;
- la deuxième fixation comprend une tôle fixée sur ledit élément incompressible et le moyen enserré des deuxièmes moyens complémentaires comprend une deuxième tige fixée à l'élément compressible, ladite tôle comprenant un trou traversant plus long que large, dont les bords forment un contour fermé, la deuxième tige passant au travers du trou, ledit contour présentant un rétrécissement, ledit trou présentant deux portions alignées suivant la longueur du trou, le rétrécissement délimitant le passage de l'une à l'autre de ces portions, une première portion formant une boucle ouverte qui forme le moyen enserrant des deuxièmes moyens complémentaires, enserre ladite deuxième tige et débouche dans la deuxième portion, la longueur du trou étant agencée selon la direction donnée et cette deuxième portion ayant une largeur telle que lorsque la deuxième tige s'est déchaussée de la boucle en cas de choc, la deuxième tige est libre en translation entre les bords de la deuxième portion ; les bords de la deuxième portion forment ainsi le moyen de retenue ; il s'agit d'une manière simple de réaliser une fixation permettant le déchaussement de l'une de ses parties, ici la deuxième tige, par exemple la tige filetée d'une vis ; cette boucle également peut être agencée pour déboucher, entre ses deux extrémités, dans le sens opposé au sens du choc selon la direction donnée ; ceci permet un meilleur déchaussement ;
- la plaque de tôle de la première fixation est la même que celle de la deuxième fixation et présente donc l'échancrure et le trou traversant ;
- les bords de la deuxième portion sont agencés de manière à être aptes à servir de rails de guidage à la tige ;
- la ou les tiges sont celles d'une vis présentant un filetage, de manière à ce que la vis soit vissée en serrant la plaque de tôle contre l'élément compressible ;
- la vis comprend une rondelle en caoutchouc enserrant la tige de la vis et enserrée par la boucle correspondante ; cette rondelle va pouvoir participer à la déformation de l'un des moyens complémentaires, pour permettre son déchaussement, tant au niveau de la première fixation que de la deuxième ;
- la rondelle présente une gorge annulaire externe, dans laquelle se loge les bords de l'échancrure ou du trou formant la boucle ; cela facilite un enserrement précis et stable de la rondelle, et donc de la tige de la vis ;
- dans le cas de la deuxième fixation, lorsque les bords de la deuxième portion sont agencés de manière à être apte à servir de rails de guidage à la tige, la rondelle a un diamètre supérieur à la distance entre les bords de la deuxième portion, de manière à ce que lorsque la tige se déchausse, ces bords restent dans la gorge de la rondelle ; cela permet que la tige reste plus sûrement guidée ;
- la vis comprend une tête et se visse dans un écrou, la plaque de tôle et une portion du moyen compressible se situant entre cette tête et cet écrou ;
- la longueur du trou et la boucle de l'échancrure sont alignées selon la direction donnée ; cela permet un meilleur déchaussement et déplacement de l'élément compressible en cas de choc selon la direction donnée ;
- l'élément compressible est un longeron en tôle s'étendant selon la direction donnée ; c'est un élément efficace pour l'absorption d'énergie et également facilement utilisable comme support ; grâce à l'invention le longeron peut être utilisé pour servir de support à cet élément incompressible, sans diminuer ses capacités de compression ;
- le véhicule comprend une plaque de tôle supplémentaire fixée sur le longeron transversalement, notamment perpendiculairement, à la direction donnée, l'élément incompressible étant également fixé à cette tôle supplémentaire par une liaison séparable ; on renforce ainsi le maintien de l'élément incompressible, et sa résistance aux vibrations ; cette liaison séparable peut être formée par une vis, apte à se déchausser d'une échancrure formée dans cette tôle supplémentaire ;
- l'élément incompressible est un dispositif mécanique transmettant une énergie motrice, électrique et/ou hydraulique ; par exemple l'élément incompressible peut être choisi parmi : un bloc hydraulique, une boite de vitesse, une batterie ; le bloc hydraulique peut comprendre un dispositif d'alimentation hydraulique, notamment pour un dispositif d'assistance au freinage ou un dispositif de gestion de contrôle de la trajectoire, permettant ainsi de protéger ces derniers de projections d'eau en les logeant dans le compartiment moteur ;
- un autre élément incompressible est fixé sur le longeron devant l'élément incompressible, selon une orientation allant de l'arrière du véhicule vers l'avant du véhicule, les deux éléments incompressibles étant alignés selon la direction longitudinale du longeron ; cela permet de faciliter le déchaussement de l'élément incompressible situé à l'arrière ;
   Un autre objet de l'invention concerne un élément incompressible relié ou accompagné d'une première fixation et d'une deuxième fixation, destiné à être fixé à un élément compressible d'un véhicule de manière à ce que ce véhicule soit un véhicule selon l'invention.

Ainsi selon une réalisation, un objet de l'invention est un dispositif mécanique transmettant une énergie motrice, électrique et/ou hydraulique, destiné à être monté dans un compartiment moteur, ledit dispositif comprenant une plaque de tôle présentant :
- une échancrure, apte à être traversée par une première tige, notamment d'une vis, passant au travers de la plaque de tôle dans l'échancrure, au moins une partie des bords de l'échancrure formant une boucle ouverte enserrant ladite première tige, les extrémités de la boucle étant non jointifs et à une distance l'une de l'autre inférieure au diamètre de ladite boucle,
- un trou traversant plus long que large, dont les bords forment un contour fermé, ledit contour présentant un rétrécissement, ledit trou présentant deux portions alignées suivant la longueur dudit trou, le rétrécissement délimitant le passage de l'une à l'autre de ces portions, une première portion formant une boucle ouverte apte à enserrer une deuxième tige, notamment d'une vis, et débouchant dans la deuxième portion, cette longueur étant agencée selon la direction donnée et cette deuxième portion ayant une largeur telle que lorsque ladite deuxième tige s'est déchaussée de la boucle en cas de choc, ladite deuxième tige est libre en translation entre les bords de ladite deuxième portion.

La plaque de tôle de ce dispositif selon l'invention peut présenter une ou plusieurs caractéristiques de la plaque de tôle dudit élément compressible du véhicule selon l'invention.

D'autres avantages pourront encore apparaître à l'homme du métier à la lecture des exemples ci-dessous, illustrés par les figures annexées, donnés à titre illustratif et non limitatif :
- La figure 1 représente le comportement en cas de choc d'un véhicule dépourvu de l'invention ;
- La figure 2 représente schématiquement une portion du véhicule selon la présente invention ;
- La figure 3 représente une vue de détail de l'élément compressible et de l'élément incompressible du véhicule selon l'invention ; cela représente donc également un élément incompressible avec ses deux fixations selon la présente invention, en position de fixation ;
- La figure 4 représente le comportement de l'élément incompressible de la figure 3, au début d'un choc ;
- La figure 5 représente la suite du comportement de l'élément incompressible en figure 4 ;
- La figure 6 représente un élément de ces deux fixations ;
- La figure 7 représente l'élément incompressible vu de derrière ;
- La figure 8 représente un détail d'une section d'un élément des fixations.

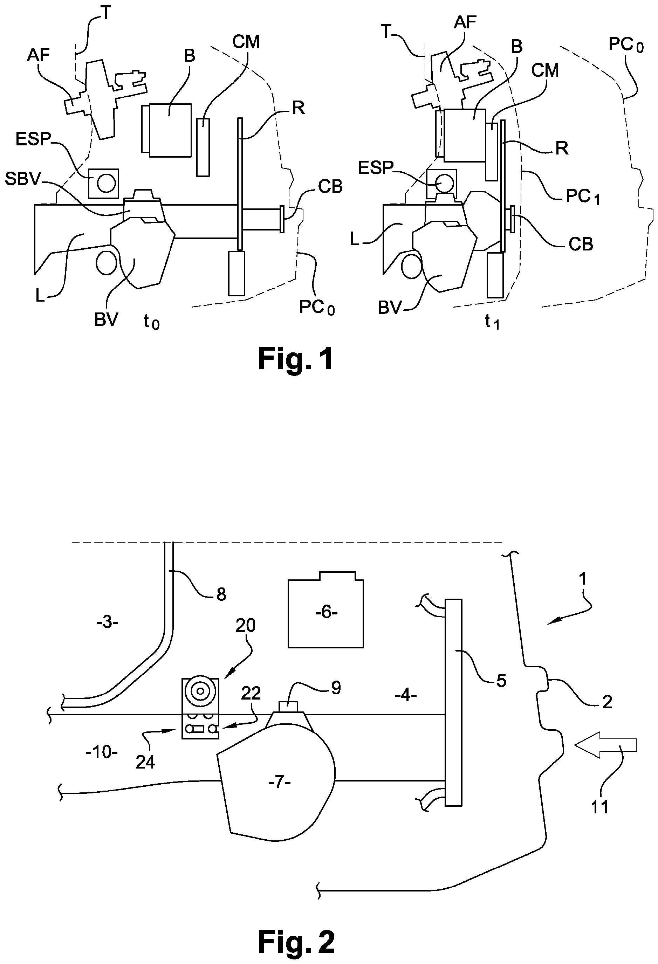

La figure 1 illustre le comportement d'un avant de véhicule automobile, un fourgon dans cet exemple, dépourvu de la présente invention, à un instant t₀ d'utilisation normale, soit avant un choc, et à un instant t₁ après une collision frontale.

A l'intérieur du compartiment du véhicule est disposé un longeron L, selon une direction longitudinale, à savoir selon une direction allant de l'arrière vers l'avant du véhicule. Dans ce compartiment, sont également disposés différents dispositifs mécaniques et/ou électriques, formant des éléments incompressibles:
- un dispositif de transmission d'une énergie motrice, notamment la boîte de vitesse BV, fixée au longeron L par un support SBV,
- un dispositif de génération d'une énergie électrique, notamment la batterie B,
- un dispositif hydraulique, notamment le bloc de gestion de contrôle de la trajectoire ESP, et un dispositif d'assistance au freinage AF,
- un dispositif de refroidissement, notamment le radiateur R,
- un calculateur moteur CM.

Entre le longeron et le profil de la carrosserie PC₀ est logé un premier absorbeur de choc CB. En cas de collision frontale d'importance moyenne, il permet d'absorber l'énergie du choc ou une partie de cette énergie. Cependant lorsque ce choc dépasse une certaine énergie, le longeron est utilisé pour absorber le surplus. Ce longeron L est en effet en tôle, et la tôle le constituant va se plier. Plus des plis se formeront et plus il y aura d'énergie absorbée.

Comme on peut le voir, au temps t₁, après le choc, le longeron a été compressé. Le profil de la carrosserie PC₁ a atteint une position plus proche du tablier T définissant la limite avec l'habitacle. Les éléments incompressibles se sont déplacés horizontalement et sont venus en appuis les uns contre les autres et/ou contre le tablier, limitant ainsi l'avancée du profil de carrosserie PC1, et donc la compression du longeron. Dans ce cas de figure, cette limite est réalisée par l'empilement horizontal de la batterie B, du calculateur moteur CM, du radiateur R et du résidu de l'absorbeur de choc CB. Il n'y a donc plus de possibilité d'absorption du choc.

Le bloc de gestion de contrôle de la trajectoire ESP n'étant pas fixé sur le longeron, la zone de ce dernier située sous ce bloc ESP peut se compresser si, comme dans cet exemple, il n'est pas dans l'alignement longitudinal avec le support du bloc de vitesse SBV. Cependant on voit que si tel n'est pas le cas, il y aura interférence entre le support de boîte de vitesse SBV et le bloc ESP.

Une telle interférence se produira en fixant ces deux éléments sur le longeron L. De plus, si le bloc de gestion de contrôle de la trajectoire ESP est fixé au longeron L, toute la portion du longeron L située sous ce bloc ESP devient rigidifiée par le bloc ESP et n'est plus compressible. Le longeron peut alors dévier et ne plus absorber l'énergie.

Ainsi ce qui est par exemple gagné en protection des éléments, comme un bloc hydraulique, lors de l'utilisation normale du véhicule, en le plaçant dans le compartiment moteur, ou bien ce qui est gagné en diminuant la taille de ce compartiment, et ce qui est gagné en possibilité d'agencement dans ce compartiment va l'être au détriment des performances d'absorption de l'énergie en cas de choc.

L'invention permet la fixation d'un bloc hydraulique au longeron sans ces inconvénients.

Ainsi comme illustré en figure 2, un élément incompressible, dans cet exemple formé par un bloc hydraulique 20, par exemple un bloc alimentant un dispositif de gestion de contrôle de la trajectoire, est logé dans un compartiment moteur 4 du véhicule 1, situé entre le tablier 8 et la carrosserie 2. Ce bloc hydraulique 20 est fixé sur un longeron longitudinal 10 en tôle. Cette fixation est réalisée au moyen d'une première fixation 22 et d'une deuxième fixation 24. Ces deux fixations 22 et 24 sont distinctes et distantes l'une de l'autre.

Ce longeron est dit longitudinal car il s'étend selon une direction allant de l'avant vers l'arrière du véhicule.

Le tablier 8 sépare le compartiment moteur de l'habitacle 3 du véhicule.

D'autres éléments incompressibles sont logés dans le compartiment moteur et notamment différents dispositifs mécaniques et/ou électriques, notamment:
- une boîte de vitesse 7, fixée au longeron 10 par un support 9, en avant du bloc de gestion de contrôle 20,
- une batterie 6,
- un radiateur 5.

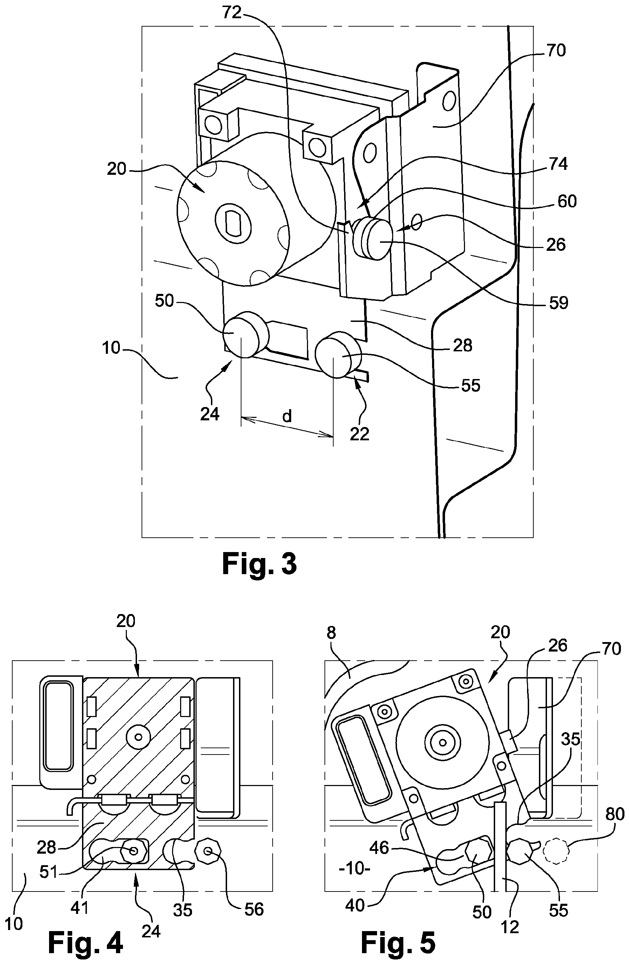

Comme on peut le voir sur les figures 3 à 5, la première fixation 22 est agencée de manière à ce qu'en cas de choc celle-ci se défasse, le bloc hydraulique 20 n'étant alors fixé plus que par la deuxième fixation 24. Sur la figure 5, les deux fixations 22 et 24 ont ainsi pu se rapprocher sous l'effet d'un choc selon une direction longitudinale 11, de l'avant vers l'arrière du véhicule, et un pli supplémentaire 12 a pu se former sur le longeron 10.

Ces deux fixations 22 et 24, et ce comportement sous le choc vont maintenant être détaillés.

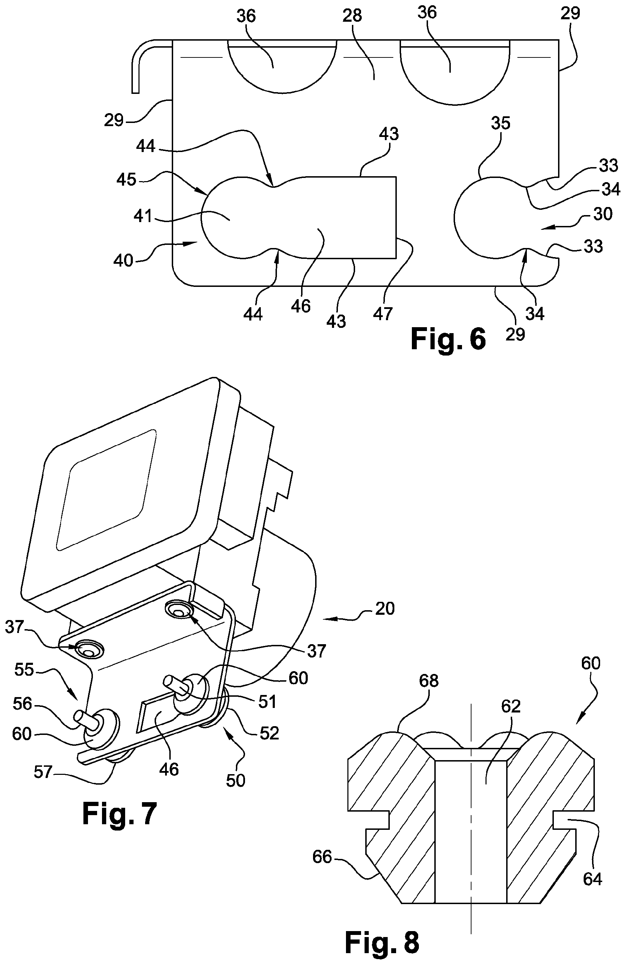

Le bloc hydraulique 20 est fixé à une plaque de tôle 28 au moyen d'éléments de fixation, tel que des vis 37. Comme illustré en figures 6 et 7, cette plaque est en forme d'une équerre avec deux portions planes sensiblement perpendiculaires. Une première de ces portions est fixée par les vis 37 au bloc hydraulique 20 et est destinée à être parallèle à une face horizontale du longeron 10. Une deuxième de ces portions planes est destinée à être fixée contre une face verticale du longeron 10, au moyen de vis 50 et 55. Le pliage entre ces deux portions planes peut être facilité par des lumières 36 dans la plaque de tôle 28.

La première fixation 22 comprend des premiers moyens complémentaires l'un de l'autre pour assurer cette première fixation. Cette plaque de tôle 28 comprend une découpe formant une échancrure 30. Cette échancrure forme l'un des premiers moyens complémentaires de la première fixation 22. Les bords de l'échancrure sont jointifs avec l'un des bords formant la périphérie 29 de la plaque de tôle 28. Par rapport à l'orientation de la plaque sur la figure 6, l'accès sur le côté à droite de l'échancrure 30 est donc libre jusqu'au fond de l'échancrure 30.

Selon une réalisation de l'invention, illustrée dans cet exemple, la partie des bords de l'échancrure 30 située au fond de cette dernière, forme une boucle ouverte 35. Cette boucle a une section environ en forme de « C » avec des extrémités 34. Ces dernières sont en fait formées par un resserrement des bords de l'échancrure 30. Après ce resserrement, les bords de l'échancrure s'écartent l'un de l'autre, formant des pans évasés 33, vers et jusqu'aux bords de la périphérie 29 de la plaque de tôle 28.

L'autre premier moyen complémentaire est une vis 55 comprenant une première tige 56. Cette tige 56 traverse l'échancrure 30 transversalement à la plaque de tôle 28, notamment perpendiculairement, à l'intérieur de la boucle ouverte 35. Le diamètre de la boucle et celui de la première tige 56 sont tels que la boucle ouverte 35 enserre cette première tige 56. Les extrémités de la boucle 35 sont donc à une distance l'une de l'autre inférieure au diamètre de la première tige 56. Ainsi en cas de choc frontal, la première tige 35 va pouvoir passer en force le rétrécissement 34, par exemple par déformation locale de ce rétrécissement, et ainsi être libérée de la boucle 35. La première fixation 22 est ainsi défaite.

La deuxième fixation 24 comprend des deuxièmes moyens complémentaires l'un de l'autre pour assurer cette deuxième fixation.

La plaque de tôle 28 comprend également une découpe formant un trou traversant 40 plus long que large. Les bords 45, 43, 47 du trou forment un contour fermé. Ce contour fermé présente un rétrécissement 44. Le trou 40 présente deux portions 41, 46 alignées suivant la longueur du trou, le rétrécissement délimitant le passage de l'une à l'autre de ces portions. Une première portion 41 située d'un côté du rétrécissement 44, à gauche en figure 6, forme une boucle ouverte 45.

Cette boucle 45 a une section environ en forme de « C » avec des extrémités. La deuxième portion 46 est de l'autre côté du resserrement, à droite sur la figure 6. Dans cette deuxième portion 46, après le resserrement, les bords du trou 40 s'écartent l'un de l'autre, puis deviennent parallèles l'un à l'autre, formant ainsi des rails de guidage 43, jusqu'à un bord fermant le trou et dit bord de butée 47.

La boucle ouverte 45 du trou 40 forme un des deuxièmes moyens complémentaires de la deuxième fixation 24.

L'autre deuxième moyen complémentaire est une vis 50 comprenant une tige 51, dite ci-après deuxième tige. Cette tige 51 traverse le trou traversant 40 transversalement à la plaque de tôle 28, notamment perpendiculairement, à l'intérieur de la boucle ouverte 45 de ce trou. Le diamètre de cette boucle et celui de la deuxième tige 51 sont tels que la boucle ouverte 45 enserre cette deuxième tige 51. Les extrémités de la boucle 45 sont donc à une distance l'une de l'autre inférieure au diamètre de la deuxième tige 51. Ainsi en cas de choc frontal, la deuxième tige 51 va pouvoir passer en force le rétrécissement 44, par exemple par déformation locale du rétrécissement, et ainsi être libérée de la boucle 45. La tige 51 va ensuite entrer dans la deuxième portion 46 du trou traversant 40. Comme ce dernier présente un contour fermé, les rails de guidage 43 et le bord de butée 47 vont maintenir la tige au niveau de ce trou traversant 40. Les bords de cette deuxième portion 46 forment donc le moyen de retenue de la tige 51, et donc de la vis 50. Cette deuxième tige 51 est donc toujours liée indirectement à la boucle 45.

Ainsi même si les deuxièmes moyens complémentaires 45 et 50 ne sont plus directement liés, la deuxième fixation 24 est maintenue grâce aux moyens de retenue 43, 47.

Pour faciliter le déchaussement des tiges 51, 56, il est possible d'agencer un autre élément incompressible aligné longitudinalement avec le bloc hydraulique 20 et devant celui-ci, par exemple, comme illustré en figure 2, le support de bloc de vitesse 9. Ainsi en cas de choc frontal, ce dernier pourra percuter et pousser le bloc hydraulique 20 vers l'arrière du véhicule 1.

Pour améliorer le fonctionnement des première et deuxième fixations 22 et 24, les vis 55 et 50 comprennent chacune une rondelle 60 en caoutchouc. Les tiges 56 et 51 sont insérées dans un logement 62 de la rondelle 60 correspondante et enserrées par cette dernière. Chaque rondelle 60 est enserrée par l'une des boucles ouvertes 35, 45. Ainsi une rondelle 60 est coincée entre la première tige 56 et la boucle ouverte 35, et une autre rondelle 60 est coincée entre la deuxième tige 51 et la boucle ouverte 45.

Comme représenté en figure 8, la rondelle 60 présente une gorge annulaire externe 64, dans laquelle se logent, selon le cas, les bords de l'échancrure 30 formant la boucle 35 ou bien les bords de la première portion 41 du trou 40 formant l'autre boucle 45. Ces bords peuvent être mis en force dans cette gorge 64, par déformation du caoutchouc au niveau de cette gorge.

La rondelle 60 va permettre d'assurer le maintien de la vis correspondante 50, 55, et faciliter le passage en force par sa possibilité de déformation en cas de choc.

Néanmoins lors du fonctionnement normal du véhicule, les vis 50, 55 et notamment la rondelle 60 assurent une fixation ferme sur le longeron 10. La tête 52, 57 de chaque vis appuie sur une première face 68 de la rondelle d'un côté de la plaque de tôle 28. De l'autre côté de la plaque de tôle 28, celui qui est vu de face en figure 7, l'extrémité de chaque tige 51, 56 comprend un filetage qui va soit être vissé dans un trou du longeron 10, soit passé au travers d'un trou du longeron 10, un écrou de l'autre côté de la tôle du longeron étant vissé sur la vis pour serrer le longeron. La rondelle présente un pan conique 66, dont le sommet du cône est orienté vers le trou du longeron 10, pour améliorer le maintien. Ainsi au niveau de chaque fixation 22, 24, la tôle du longeron 10 est serrée entre un écrou et le pan conique 66 correspondant, et la plaque de tôle 28 est serrée par la gorge annulaire entre la tête de vis correspondante 52, 57 et le longeron 10.

La longueur du trou 40 est agencée selon ladite direction donnée 11, à savoir la direction du choc frontal, qui est également la direction longitudinale du longeron 10. Dans cet exemple, la boucle 45 du trou traversant 40 et celle 35 de l'échancrure 30 s'ouvrent vers le choc frontal, pour faciliter le déchaussement.

Lors d'un choc avant, la zone avant se comprime jusqu'à venir en contact avec la batterie 6, le support batterie se rompt alors, ce qui permet la poursuite de la compression du longeron 10, jusqu'à atteindre le support de boîte de vitesse 9. Les fixations du support de boîte de vitesse 9 se cassent séparant ainsi le groupe motopropulseur (non représenté) de la caisse et en lui permettant de tourner autour d'un axe vertical pour venir se loger sous le plancher après choc.

La figure 4 est une vue en coupe vue de face de la figure 3, au niveau d'un plan passant dans l'épaisseur de la deuxième portion plane de la plaque de tôle 28, lorsque le choc frontal arrive au niveau du bloc hydraulique 20. Comme on peut le voir, le choc va entrainer le déchaussement des tiges 51 et 56 des vis. La vis 55 reste fixée au longeron et reliée à la plaque de tôle 28 mais la plaque de tôle 28 s'est détachée de la première tige 56. La gorge annulaire 64 de la rondelle 60 autour de la deuxième tige 51, reste en effet autour des rails de guidage 43 après être sortie de la première portion 41 du trou. La deuxième tige reste donc logée dans la deuxième portion 46 du trou. Les rails de guidage 43 guident le déplacement de la plaque support 28 le long de la gorge annulaire 64 de la vis 50, en translation selon la direction donnée 11.

Ainsi libérée de la première fixation, la zone d du longeron située entre les deux fixations 22, 24, va pouvoir se comprimer. A titre non limitatif, sur cet exemple, les tiges 51 et 56 sont distantes d'une distance d'environ 25 millimètres. Comme illustré en figure 5, un pli supplémentaire 12 a pu ainsi se faire dans la tôle du longeron 10. La première fixation 22 a ainsi quitté sa position initiale 80 pour se rapprocher de la deuxième fixation 24.

De plus, la tige 51 de la vis 50 s'est arrêtée contre le bord de butée 47. Le bloc hydraulique 20 a ainsi pivoté autour de cette deuxième tige 51, pour venir se loger plus facilement sous le tablier 8. De plus, ainsi incliné cela libère également un peu de place pour qu'un autre élément incompressible, tel que le support de boîtier de vitesse 9, puisse se rapprocher davantage de l'habitacle 3.

Ainsi grâce aux rails de guidage 43 et au bord de butée 47, le bloc hydraulique 20 a pu s'effacer dès l'instant où le support de boîte de vitesse 9 l'atteint. Cela a permis également au groupe motopropulseur de suivre la bonne trajectoire sans être dévié. De plus, l'emplacement et le logement du bloc hydraulique 20 ont été contrôlés pour améliorer davantage la compressibilité à l'intérieur du compartiment moteur 4.

Il est également possible d'ajouter une plaque de tôle supplémentaire 70, fixée sur le longeron 10 transversalement, ici perpendiculairement, à la direction longitudinale du longeron 10. La fixation 26 de cette tôle supplémentaire 70 utilise une vis 59 identiques aux vis 50 et 55 des première et deuxième fixations 22, 24, avec également une rondelle en caoutchouc 60 telle que décrite précédemment.

Cette plaque de tôle supplémentaire 70 comprend également une échancrure. Celle-ci est située en bord de la plaque de tôle supplémentaire 70, de manière à former une languette de tôle 72 entre l'échancrure et la périphérie de cette plaque de tôle supplémentaire. Ainsi la vis 59 est logée dans cette échancrure en étant maintenue sur un côté par la languette de tôle 72.

Lors du début du choc cette languette 72 va se déformer et libérer la tige de la vis 59.

A noter que la portée de l'invention est définie selon les revendications ci-jointes et n'est pas limitée à un véhicule. Elle vise également un élément incompressible avec ses première et deuxième fixations. Par exemple, l'élément incompressible, tel que le bloc hydraulique 20, peut être livré avec sa plaque de tôle 28 dédiée, en « kit », ou avec la plaque de tôle déjà montée. Egalement, cette plaque pourrait être d'une seule pièce avec l'élément incompressible, par exemple d'une seule pièce avec son boîtier.

Un autre avantage de l'invention est qu'elle permet sur des modèles de véhicules conçus pour placer un élément incompressible hors du compartiment moteur, de modifier ceux-ci ultérieurement en plaçant cet élément dans le compartiment moteur et en le fixant sur le longeron, sans dégrader les capacités de compressibilité du longeron.

## Revendications

1. Véhicule automobile (1) comprenant :
- un élément incompressible (20) logé dans un compartiment moteur (4),
- un élément compressible (10) selon une direction donnée (11) en cas de choc, sur lequel ledit élément incompressible est fixé au moyen d'une première fixation (22) et d'une deuxième fixation (24), distinctes et distantes l'une de l'autre,
**caractérisé en ce que** la première fixation (22) est agencée de manière à ce qu'en cas de choc celle-ci se défasse ou se rompe, l'élément incompressible (20) n'étant alors fixé plus que par la deuxième fixation (24).

2. Véhicule automobile (1) selon la revendication 1, dans lequel la première fixation (22) comprend des premiers moyens complémentaires, comprenant un moyen enserrant (35) et un moyen enserré (55), le moyen enserrant (35) enserrant partiellement le moyen enserré, l'un de ces moyens complémentaires étant solidaire de l'élément compressible (10) et l'autre de l'élément incompressible (20), la première fixation n'étant assurée que par ce moyen enserrant (35) et ce moyen enserré (55), au moins l'un de ces premiers moyens complémentaires étant déformable, les premiers moyens complémentaires étant agencés de manière à ce qu'en cas de choc, le moyen enserré (55) se déchausse du moyen enserrant (35).

3. Véhicule automobile (1) selon la revendication 2, dans lequel la première fixation (22) comprend une plaque de tôle (28) fixée sur ledit élément incompressible et dans lequel le moyen enserré (55) comprend une première tige (56) fixée à l'élément compressible (10), cette plaque de tôle comprenant une échancrure (30), ladite première tige passant au travers de la plaque de tôle dans l'échancrure, au moins une partie des bords de l'échancrure formant une boucle ouverte (35) qui forme ledit moyen enserrant et enserre cette première tige (56), les extrémités de la boucle étant non jointives et à une distance l'une de l'autre inférieure au diamètre de ladite première tige.

4. Véhicule automobile (1) selon l'une des revendications 2 ou 3, dans lequel la deuxième fixation (24) comprend :
- des deuxièmes moyens complémentaires, comprenant un moyen enserrant (45) et un moyen enserré (50), ce moyen enserrant (45) enserrant partiellement le moyen enserré, l'un de ces deuxièmes moyens complémentaires étant solidaire de l'élément compressible (10) et l'autre de l'élément incompressible (20), la deuxième fixation étant assurée par ce moyen enserrant (45) et ce moyen enserré (50), au moins l'un de ces deuxièmes moyens complémentaires étant déformable,
- un moyen de retenue (43, 47) solidaire d'une part avec l'un (50) des deuxièmes moyens complémentaires et d'autre part avec l'autre (45) de ces deuxièmes moyens complémentaires,
les deuxièmes moyens complémentaires étant agencés de manière à ce qu'en cas de choc, le moyen enserré (50) se déchausse du moyen enserrant (45), la deuxième fixation n'étant alors assurée plus que par le moyen de retenue (43, 47) .

5. Véhicule automobile (1) selon la revendication 4, dans lequel la deuxième fixation (24) comprend une tôle (28) fixée sur ledit élément incompressible (20) et dans lequel le moyen enserré (50) des deuxièmes moyens complémentaires comprend une deuxième tige (51) fixée à l'élément compressible (10), ladite tôle comprenant un trou traversant (40) plus long que large, dont les bords (45, 43, 47) forment un contour fermé, ladite deuxième tige passant au travers dudit trou, ledit contour présentant un rétrécissement (44), ledit trou présentant deux portions (41, 46) alignées suivant la longueur du trou, le rétrécissement délimitant le passage de l'une à l'autre de ces portions, une première portion (41) formant une boucle ouverte (45) qui forme ledit moyen enserrant des deuxièmes moyens complémentaires, enserre ladite deuxième tige (51) et débouche dans la deuxième portion (46), la longueur du trou étant agencée selon ladite direction donnée (11) et cette deuxième portion ayant une largeur telle que lorsque ladite deuxième tige s'est déchaussée de la boucle en cas de choc, ladite deuxième tige est libre en translation entre les bords (43) de ladite deuxième portion, qui forment ainsi le moyen de retenue.

6. Véhicule automobile (1) selon la revendication 3 et/ou 5, dans lequel la ou les tiges (51, 56) sont celles d'une vis (50, 55) présentant un filetage, de manière à ce que la vis soit vissée en serrant la tôle (28) contre l'élément compressible (10).

7. Véhicule automobile (1) selon la revendication 6, dans laquelle, la vis (50, 55) comprend une rondelle (60) en caoutchouc enserrant la tige (51, 56) de la vis et enserrée par la boucle correspondante (45, 35).

8. Véhicule automobile (1) selon l'une des revendications précédentes, dans lequel l'élément compressible est un longeron (10) en tôle s'étendant selon la direction donnée (11).

9. Véhicule automobile (1) selon l'une des revendications précédentes, dans lequel l'élément incompressible est choisi parmi : un bloc hydraulique (20), une boite de vitesse, une batterie.

10. Dispositif mécanique (20) transmettant une énergie motrice, électrique et/ou hydraulique, destiné à être monté dans un compartiment moteur (4), ledit dispositif comprenant une plaque de tôle (28) présentant :
- une échancrure (30), apte à être traversée par une première tige (56), passant au travers de la tôle dans l'échancrure, au moins une partie des bords de l'échancrure formant une boucle ouverte (35) enserrant ladite première tige, les extrémités de la boucle étant non jointifs et à une distance l'une de l'autre inférieure au diamètre de ladite boucle,
- un trou traversant (40) plus long que large, dont les bords (45, 43, 47) forment un contour fermé, ledit contour présentant un rétrécissement (44), ledit trou présentant deux portions (41, 46) alignées suivant la longueur dudit trou, le rétrécissement délimitant le passage de l'une à l'autre de ces portions, la première portion (41) formant une boucle ouverte (45) apte à enserrer une deuxième tige (51), et débouchant dans la deuxième portion (46), cette longueur étant agencée selon une direction donnée (11) et cette deuxième portion (46) ayant une largeur telle que lorsque ladite deuxième tige (51) s'est déchaussée de la boucle suite à un choc, ladite deuxième tige est libre en translation entre les bords (43) de ladite deuxième portion, **caractérisé en ce que** les bords de la deuxième portion forment ainsi un moyen de retenue.

## Patentansprüche

1. Kraftfahrzeug (1), umfassend:
- ein inkompressibles Element (20), das in einem Motorraum (4) aufgenommen ist,
- ein im Fall einer Kollision entlang einer gegebenen Richtung (11) kompressibles Element, an dem das inkompressible Element (10) mittels einer ersten Befestigung (22) und einer zweiten Befestigung (24) befestigt ist, die verschieden und voneinander beabstandet sind,
**dadurch gekennzeichnet, dass** die erste Befestigung (22) so angeordnet ist, dass sie sich im Fall einer Kollision löst oder bricht, woraufhin das inkompressible Element (20) nur noch durch die zweite Befestigung (24) befestigt ist.

2. Kraftfahrzeug (1) nach Anspruch 1, bei dem die erste Befestigung (22) erste komplementäre Mittel umfasst, die ein einspannendes Mittel (35) und ein eingespanntes Mittel (55) umfassen, wobei das einspannende Mittel (35) das eingespannte Mittel teilweise einspannt, wobei eines der komplementären Mittel mit dem kompressiblen Element (10) und das andere mit dem inkompressiblen Element (20) verbunden ist, wobei die erste Befestigung nur durch dieses einspannende Mittel (35) und dieses eingespannte Mittel (55) gewährleistet wird, wobei mindestens eines dieser ersten komplementären Mittel verformbar ist, wobei die ersten komplementären Mittel so angeordnet sind, dass sich das eingespannte Mittel (55) im Fall einer Kollision von dem einspannenden Mittel (35) löst.

3. Kraftfahrzeug (1) nach Anspruch 2, bei dem die erste Befestigung (22) eine Blechplatte (28) umfasst, die an dem inkompressiblen Element befestigt ist, und bei dem das eingespannte Mittel (55) einen ersten Schaft (56) umfasst, der an dem kompressiblen Element (10) befestigt ist, wobei diese Blechplatte einen Ausschnitt (30) umfasst, wobei der erste Schaft in dem Ausschnitt durch die Blechplatte hindurch verläuft, wobei mindestens ein Teil der Ränder des Ausschnitts einen offenen Ring (35) bildet, der das einspannende Mittel bildet und diesen ersten Schaft (56) einspannt, wobei die Enden des Rings nicht aneinanderstoßen und in einem Abstand voneinander sind, der geringer als der Durchmesser des ersten Schafts ist.

4. Kraftfahrzeug (1) nach einem der Ansprüche 2 oder 3, bei dem die zweite Befestigung (24) umfasst:
- zweite komplementäre Mittel, die ein einspannendes Mittel (45) und ein eingespanntes Mittel (50) umfassen, wobei dieses einspannende Mittel (45) das eingespannte Mittel teilweise einspannt, wobei eines dieser zweiten komplementären Mittel mit dem kompressiblen Element (10) und das andere mit dem inkompressiblen Element (20) verbunden ist, wobei die zweite Befestigung durch dieses einspannende Mittel (45) und dieses eingespannte Mittel (50) gewährleistet wird, wobei mindestens eines dieser zweiten komplementären Mittel verformbar ist,
- ein Haltemittel (43, 47), das einerseits mit dem einen (50) der zweiten komplementären Mittel und andererseits mit dem anderen (45) dieser zweiten komplementären Mittel verbunden ist,
wobei die zweiten komplementären Mittel so angeordnet sind, dass sich das eingespannte Mittel (50) im Fall einer Kollision aus dem einspannenden Mittel (45) löst, woraufhin die zweite Befestigung nur noch durch das Haltemittel (43, 47) gewährleistet wird.

5. Kraftfahrzeug (1) nach Anspruch 4, bei dem die zweite Befestigung (24) ein Blech (28) umfasst, das an dem inkompressiblen Element (20) befestigt ist, und bei dem das eingespannte Mittel (50) der zweiten komplementären Mittel einen zweiten Schaft (51) umfasst, der an dem kompressiblen Element (10) befestigt ist, wobei das Blech ein Durchgangsloch (40) umfasst, das länger als breit ist, dessen Ränder (45, 43, 47) eine geschlossene Kontur bilden, wobei der zweite Schaft durch das Loch hindurch verläuft, wobei die Kontur eine Verengung (44) aufweist, wobei das Loch zwei entlang der Länge des Lochs ausgerichtete Abschnitte (41, 46) aufweist, wobei die Verengung den Übergang vom einen zum anderen dieser Abschnitte begrenzt, wobei der erste Abschnitt (41) einen offenen Ring (45) bildet, der das einspannende Mittel der zweiten komplementären Mittel bildet, den zweiten Schaft (51) einspannt und in den zweiten Abschnitt (46) mündet, wobei die Länge des Lochs entlang der gegebenen Richtung (11) angeordnet ist und dieser zweite Abschnitt eine derartige Breite hat, dass, wenn sich der zweite Schaft im Fall einer Kollision aus dem Ring gelöst hat, der zweite Schaft translatorisch frei beweglich zwischen den Rändern (43) des zweiten Abschnitts ist, die somit das Haltemittel bilden.

6. Kraftfahrzeug (1) nach Anspruch 3 und/oder 5, bei dem der Schaft oder die Schäfte (51, 56) die einer Schraube (50, 55) sind, die ein Gewinde aufweist, so dass die Schraube eingeschraubt wird und dabei das Blech (28) gegen das kompressible Element (10) einspannt.

7. Kraftfahrzeug (1) nach Anspruch 6, bei dem die Schraube (50, 55) eine Scheibe (60) aus Kautschuk umfasst, die den Schaft (51, 56) der Schraube einspannt und von dem entsprechenden Ring (45, 35) eingespannt wird.

8. Kraftfahrzeug (1) nach einem der vorhergehenden Ansprüche, bei dem das kompressible Element ein Längsträger (10) aus Blech ist, der sich entlang der gegebenen Richtung (11) erstreckt.

9. Kraftfahrzeug (1) nach einem der vorhergehenden Ansprüche, bei dem das inkompressible Element gewählt ist unter: einer Hydraulikeinheit (20), einem Getriebe, einer Batterie.

10. Mechanische Vorrichtung (20), die eine elektrische und/oder hydraulische Antriebsenergie überträgt und dazu bestimmt ist, in einem Motorraum (4) montiert zu werden, wobei die Vorrichtung eine Blechplatte (28) umfasst, die aufweist:
- einen Ausschnitt (30), der geeignet ist, von einem ersten Schaft (56) durchquert zu werden, der in dem Ausschnitt durch das Blech hindurch verläuft, wobei mindestens ein Teil der Ränder des Ausschnitts einen offenen Ring (35) bildet, der den ersten Schaft einspannt, wobei die Enden des Rings nicht aneinanderstoßen und in einem Abstand voneinander sind, der geringer als der Durchmesser des Rings ist,
- ein Durchgangsloch (40), das länger als breit ist, dessen Ränder (45, 43, 47) eine geschlossene Kontur bilden, wobei die Kontur eine Verengung (44) aufweist, wobei das Loch zwei entlang der Länge des Lochs ausgerichtete Abschnitte (41, 46) aufweist, wobei die Verengung den Übergang vom einen zum anderen dieser Abschnitte begrenzt, wobei der erste Abschnitt (41) einen offenen Ring (45) bildet, der geeignet ist, einen zweiten Schaft (51) einzuspannen, und in den zweiten Abschnitt (46) mündet, wobei diese Länge entlang einer gegebenen Richtung (11) angeordnet ist und dieser zweite Abschnitt (46) eine derartige Breite hat, dass, wenn sich der zweite Schaft (51) im Fall einer Kollision aus dem Ring gelöst hat, der zweite Schaft translatorisch frei beweglich zwischen den Rändern (43) des zweiten Abschnitts ist, die somit das Haltemittel bilden.

## Claims

1. Motor vehicle (1) comprising:
- an incompressible element (20) housed in an engine compartment (4),
- an element (10) that is compressible in a given direction (11) in the event of an impact, to which said incompressible element is fastened by means of a first fastening (22) and a second fastening (24) that are separate and at a distance from one another,
**characterized in that** the first fastening (22) is designed such that, in the event of an impact, it comes undone or breaks, the incompressible element (20) then only still being fastened by the second fastening (24).

2. Motor vehicle (1) according to Claim 1, wherein the first fastening (22) comprises first complementary means, comprising a surrounding means (35) and a surrounded means (55), the surrounding means (35) partially surrounding the surrounded means, one of these complementary means being secured to the compressible element (10) and the other to the incompressible element (20), the first fastening being ensured only by this surrounding means (35) and this surrounded means (55), at least one of these first complementary means being deformable, the first complementary means being designed such that, in the event of an impact, the surrounded means (55) detaches from the surrounding means (35).

3. Motor vehicle (1) according to Claim 2, wherein the first fastening (22) comprises a metal plate (28) fastened to said incompressible element, and wherein the surrounded means (55) comprises a first shank (56) fastened to the compressible element (10), this metal plate comprising a cutout (30), said first shank passing through the metal plate into the cutout, at least part of the edges of the cutout forming an open loop (35) that forms said surrounding means and surrounds said first shank (56), the ends of the loop not meeting and being at a distance from one another of less than the diameter of said first shank.

4. Motor vehicle (1) according to either of Claims 2 and 3, wherein the second fastening (24) comprises:
- second complementary means, comprising a surrounding means (45) and a surrounded means (50), this surrounding means (45) partially surrounding the surrounded means, one of the second complementary means being secured to the compressible element (10) and the other to the incompressible element (20), the second fastening being ensured by this surrounding means (45) and this surrounded means (50), at least one of these second complementary means being deformable,
- a retaining means (43, 47) secured to one (50) of the second complementary means for the one part and to the other (45) of these second complementary means for the other part,
the second complementary means being designed such that, in the event of an impact, the surrounded means (50) detaches from the surrounding means (45), the second fastening then only still being ensured by the retaining means (43, 47) .

5. Motor vehicle (1) according to Claim 4, wherein the second fastening (24) comprises a metal sheet (28) fastened to said incompressible element (20), and wherein the surrounded means (50) of the second complementary means comprises a second shank (51) fastened to the compressible element (10), said metal sheet comprising a through-hole (40) that is longer than it is wide, the edges (45, 43, 47) of which form a closed contour, said second shank passing through said hole, said contour having a narrowing (44), said hole having two portions (41, 46) that are aligned along the length of the hole, the narrowing limiting the passage from one of these portions to the other, a first portion (41) forming an open loop (45) that forms said surrounding means of the second complementary means, surrounds said second shank (51) and opens into the second portion (46), the length of the hole being arranged in said given direction (11) and this second portion having a width such that, when said second shank has detached from the loop in the event of an impact, said second shank is free to move in translation between the edges (43) of said second portion, which thus form the retaining means.

6. Motor vehicle (1) according to Claim 3 and/or 5, wherein the shank(s) (51, 56) are those of a screw (50, 55) having a thread, such that the screw is screwed while clamping the metal sheet (28) against the compressible element (10).

7. Motor vehicle (1) according to Claim 6, wherein the screw (50, 55) comprises a rubber washer (60) surrounding the shank (51, 56) of the screw and surrounded by the corresponding loop (45, 35).

8. Motor vehicle (1) according to one of the preceding claims, wherein the compressible element is a sheet-metal side member (10) extending in the given direction (11).

9. Motor vehicle (1) according to one of the preceding claims, wherein the incompressible element is chosen from: a hydraulic block (20), a gearbox, a battery.

10. Mechanical device (20) that transmits electric and/or hydraulic driving energy and is intended to be mounted in an engine compartment (4), said device comprising a metal plate (28) having:
- a cutout (30) that is able to be passed through by a first shank (56), passing through the sheet metal into the cutout, at least a part of the edges of the cutout forming an open loop (35) surrounding said first shank, the ends of the loop not meeting and being at a distance from one another of less than the diameter of said loop,
- a through-hole (40) that is longer than it is wide, the edges (45, 43, 47) of which form a closed contour, said contour having a narrowing (44), said hole having two portions (41, 46) that are aligned along the length of said hole, the narrowing limiting the passage from one of these portions to the other, the first portion (41) forming an open loop (45) that is able to surround a second shank (51) and opens into the second portion (46), this length being arranged in a given direction (11) and this second portion (46) having a width such that, when said second shank (51) has detached from the loop following an impact, said second shank is free to move in translation between the edges (43) of said second portion, **characterized in that** the edges of the second portion thus form a retaining means.
